# EUROPÄISCHE PATENTSCHRIFT

(11) **EP 3 186 097 B1**
(45) Veröffentlichungstag und Bekanntmachung des Hinweises auf die Patenterteilung: **06.06.2018**
(21) Anmeldenummer: 15727411.9
(22) Anmeldetag: 09.06.2015
(51) Int. Cl.: B60C 11/24, B60C 11/12

(54) **FAHRZEUGLUFTREIFEN**
VEHICLE TYRE
PNEUMATIQUE DE VÉHICULE

(30) Priorität: 28.08.2014 DE 102014217151
(43) Veröffentlichungstag der Anmeldung: 05.07.2017
(73) Patentinhaber: Continental Reifen Deutschland GmbH, 30165 Hannover (DE)
(72) Erfinder: RITTWEGER, Stefan, 30826 Garbsen (DE); RIEKKOLA, Jaakko, 30169 Hannover (DE)
(74) Vertreter: Finger, Karsten
(86) Internationale Anmeldenummer: PCT/EP2015/062749
(87) Internationale Veröffentlichungsnummer: WO 2016/030033

(56) Entgegenhaltungen:
- EP-A2- 0 250 113
- DE-A1- 2 227 353
- DE-T2- 60 027 088
- DE-T5-112006 001 261
- JP-B2- 2 900 267
- US-A1- 2012 090 749

## Beschreibung

Die Erfindung betrifft einen Fahrzeugluftreifen mit einem Laufstreifen mit Profilpositiven in den Schulterbereichen, an deren Oberfläche zumindest je ein Einstellungsindikator ausgebildet ist, welcher zumindest zwei Einschnitte unterschiedlicher Tiefen aufweist, welche ausgehend von der Oberfläche in radialer Richtung in den Laufstreifen hineinragen, wobei die Einschnitte in Richtung Laufstreifenmitte aufeinander folgen und umso tiefer ausgeführt sind, je geringer ihre Entfernung von der Laufstreifenmitte ist.

Es ist üblich, an Laufstreifen von Fahrzeugluftreifen sogenannte Abriebsindikatoren vorzusehen, welche Informationen über den Gesamtabrieb des Laufstreifens von Reifen liefern, ohne dass Messwerkzeuge benötigt werden. Darüber hinaus ist es bekannt, spezielle Einstellungsindikatoren am Laufstreifen auszubilden, die auf einen ungleichmäßigen Laufstreifenabrieb in den beiden Schulterbereichen hinweisen. Diese sind von gewisser Bedeutung, da die Ursache von ungleichmäßigem Laufstreifenabrieb häufig ein falsch eingestelltes Fahrwerk ist.

Einstellungsindikatoren, mit deren Hilfe die Gleichmäßigkeit des Laufstreifenabriebes beurteilt werden kann, sind im Allgemeinen flach ausgeführt und oberflächlich auf Profilpositiven der beiden Schulterbereiche von Laufstreifen positioniert, wobei zumindest je ein Indikator in jedem Schulterbereich des Laufstreifens angeordnet ist. Sinnvoller Weise sind die beiden Indikatoren im Allgemeinen einander gegenüberliegend platziert und daher. durch den Laufstreifenmittelteil voneinander getrennt.

Ein Fahrzeugluftreifen der eingangs genannten Art ist aus der JP 2 900267 B2 bekannt. Dieser Reifen weist einen Laufstreifen mit einer Anzahl von in Reihen umlaufenden Profilblöcken auf. In diesen Profilblöcken sind in Umfangsrichtung und insbesondere gerade und parallel zueinander verlaufende Einschnitte ausgebildet, die umso tiefer ausgeführt sind, je geringer ihre Entfernung von der Laufstreifenmitte ist, sodass die Steifigkeit der Profilblöcke in ihrer Erstreckung Richtung Laufstreifenmitte geringer wird.

Ein weiterer Fahrzeugluftreifen ist aus der EP 0 250 113 A2 bekannt. Der Laufstreifen dieses Fahrzeugluftreifens weist in seinen Schulterbereichen jeweils mindestens zwei, bevorzugter Weise jedoch fünf, in Umfangsrichtung aufeinander folgende Einschnitte auf, wobei zumindest je zwei dieser Einschnitte voneinander verschiedene Längen und Tiefen besitzen. Die Einschnitte selbst erstrecken sich in axialer Richtung und sind umso länger ausgeführt je geringer ihrer Tiefe ist.

Aus der GB 2 303 590 A ist ein Fahrzeugluftreifen bekannt, welcher radial innerhalb des Laufstreifens farbige und in Umfangsrichtung umlaufende Bänder enthält, welche aus Kautschukmischungen mit farbigen Füllstoffen hergestellt sind. Diese Bänder werden bei entsprechendem Abrieb des Laufstreifens zumindest teilweise sichtbar und geben dadurch einen Hinweis auf den Fortschritt des Abriebes. Insbesondere können derartige Bänder auch bei nicht profilierten Reifen, wie sie vor allem im Motorradsport Verwendung finden, eingesetzt werden.

Der aus der WO 03/062782 A1 bekannte Fahrzeugluftreifen weist einen Laufstreifen auf, dessen Material speziell gefärbt ist, sodass beispielsweise ein Erscheinen eines roten Laufstreifenstückes die Mindestprofiltiefe kennzeichnet. Zusätzlich können weitere farbige Lagen, beispielsweise in gelb oder orange, radial außerhalb der roten Lage angeordnet sein.

Die bisher bekannten Einstellungsindikatoren sind nur schlecht erkennbar oder schwer am Laufstreifen auffindbar und liefern eine nur dem Fachmann erkennbare sowie erst nach stark fortgeschrittenem Abrieb sichtbare Information über einen etwaigen ungleichmäßigen Laufstreifenabrieb.

Der Erfindung liegt daher die Aufgabe zugrunde, einen Einstellungsindikator derart zu gestalten, dass bereits nach geringer Laufleistung, d.h. nach relativ geringem Abrieb des Laufstreifens, schnell und einfach festgestellt werden kann, ob in den Schulterbereichen der Reifen eines Fahrzeuges ein ungleichmäßiger Abrieb erfolgt und ob daher das Fahrwerk richtig eingestellt und insbesondere die Sturzeinstellung an der Vorderachse des Fahrzeuges korrekt vorgenommen wurde.

Gelöst wird die gestellte Aufgabe erfindungsgemäß dadurch, dass die Einschnitte in Draufsicht V-förmig ausgeführt sind oder einen V-förmigen Abschnitt aufweisen, wobei die V- Spitze in Richtung Laufstreifenmitte zeigt.

Im Zuge des Abriebes des Laufstreifens werden die Einstellungsindikatoren daher derart abgerieben, dass axial weiter außenliegende Einschnitte früher verschwinden als axial weiter innenliegende Einschnitte. Mit einem derart ausgeführten Einstellungsindikator kann, je nach Tiefe der Einschnitte, bereits nach kurzer Reifenlaufzeit erkannt werden, ob ein Reifen, wie gewünscht, an seinen Schulterbereichen gleichmäßig abgerieben wird oder ob eine Nachjustierung des Fahrwerkes notwendig ist. Darüber hinaus kann im Fall eines ungleichmäßigen Abriebes anhand der noch vorhandenen Einschnitte abgeschätzt werden, wie stark der ungleichmäßige Abrieb ausgeprägt ist und daher in welchem Ausmaß das Fahrwerk verstellt ist. Die Einschnitte sind in Draufsicht V-förmig ausgeführt oder weisen einen V-förmigen Abschnitt auf, wobei die V- Spitze in Richtung Laufstreifenmitte zeigt und die V-Form symmetrisch oder asymmetrisch ausgeführt sein kann. Die V-Form sorgt für eine besonders gute Erkennbarkeit der Einschnitte, diese sind am Reifen vorteilhafterweise besonders gut auffindbar. Das durch die V-Form verliehene pfeilartige Aussehen der Einschnitte liefert zudem einen Hinweis auf die Reihenfolge, in welcher die Einschnitte nacheinander abgerieben werden.

Die Erkennbarkeit des Einstellungsindikators lässt sich erfindungsgemäß noch dadurch verbessern, dass der Einstellungsindikator eine Indikatoroberfläche aufweist, die mit einer Vielzahl von parallel zueinander verlaufenden Rippen versehen ist, die von der Profilpositivoberfläche abragen, wobei die Rippen insbesondere eine Höhe und an ihrer Basis eine Breite von 0,3 mm bis 0,6 mm aufweisen und unter einem Winkel von 40° bis 50° zur Umfangsrichtung geneigt verlaufen, wodurch ihre Erkennbarkeit noch weiter verbessert wird. Die Rippen werden im Zuge des Laufstreifenabriebes zuerst abgerieben.

Bei einer bevorzugten Ausführung der Erfindung ist die Indikatoroberfläche, in Draufsicht betrachtet, in Form eines Parallelogramms mit abgerundeten Ecken ausgeführt, wobei die Seiten des Parallelogramms im Wesentlichen in axialer Richtung und in Umfangsrichtung verlaufen. Ist die Indikatoroberfläche von einer Umrandung umlaufen bzw. begrenzt, welche gegenüber der Profilpositivoberfläche als Erhebung ausgeführt ist, wird sie besonders auffällig und leicht auffindbar.

Bei einer bevorzugten Ausführungsform der Erfindung weist der seichteste Einschnitt einer Tiefe von 0,3 mm bis 0, 7 mm auf. Der tiefste Einschnitt besitzt vorzugsweise eine Tiefe von zumindest 0,8 mm bis 1,2 mm, insbesondere von 1,3 mm bis 1,7 mm. Diese Tiefen gewährleisten, dass bei bereits geringem Schulterabrieb der einhergehende Abrieb der Einstellungsindikatoren Informationen über einen ungleichmäßigen bzw. unterschiedlichen Abrieb der Schulterbereiche liefert.

Weitere Merkmale, Vorteile und Einzelheiten der Erfindung werden nun anhand der Zeichnung, in der schematisch zwei Ausführungsformen der Erfindung dargestellt sind, näher erläutert.

Dabei zeigen
Fig. 1 und Fig. 2 je einen Ausschnitt eines Laufstreifens im Schulterbereich in Draufsicht mit je einer Ausführungsvariante eines Einstellungsindikators gemäß der Erfindung,
Fig 1a bis Fig 1c Schnittdarstellungen entlang der Linien Ia-Ia, Ib-Ib, Ic-Ic der Fig. 1 in vergrößerter Darstellung,
Fig 2a und Fig 2b Schnittdarstellungen entlang der Linien IIa-IIa, IIb-IIb der Fig. 2 ebenfalls in vergrößerter Darstellung und
Fig. 3 bis Fig. 5 je eine Frontansicht von zwei einer Fahrzeugachse zugeordneten Reifen bei unterschiedlichen Fahrwerkseinstellungen.

Gemäß der Erfindung ausgeführte Laufstreifen von Reifen weisen zumindest einen erfindungsgemäß ausgeführten Einstellungsindikator in jedem Schulterbereich auf, wobei die Einstellungsindikatoren vorzugsweise einander gegenüberliegend, d.h. durch den Laufstreifenmittelteil voneinander getrennt, angeordnet sind. Jeder Reifen besitzt daher, bezogen aus seine Position auf der Fahrzeugachse bzw. bezogen auf die Fahrzeuglängsachse, zumindest einen außenseitigen und einen innenseitigen Einstellungsindikator. Diese dienen zur Anzeige von durch falsche Fahrwerkseinstellungen bedingtem ungleichmäßigem Laufstreifenabrieb in den Schulterbereichen der Reifen. Bevorzugter Weise sind mehrere solcher Einstellungsindikatoren in beiden Schulterbereichen gleichmäßig über den Reifenumfang, insbesondere in 90°-Intervallen, platziert.

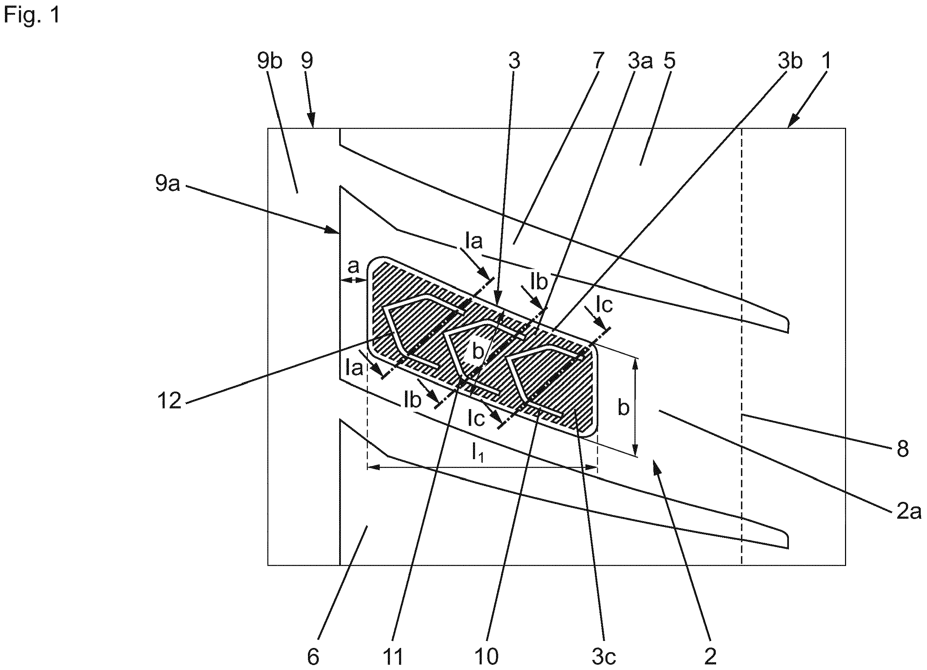

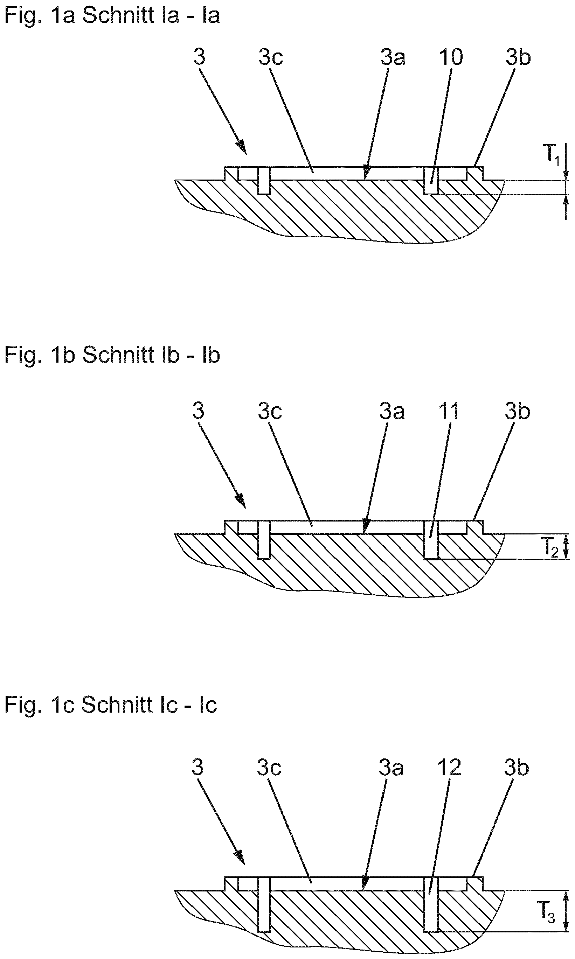

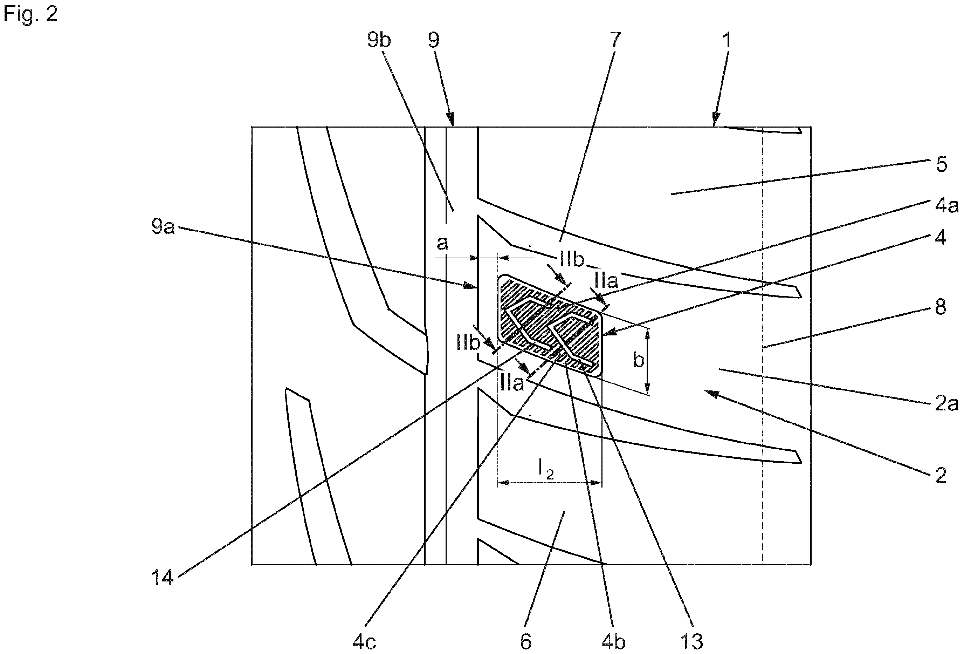

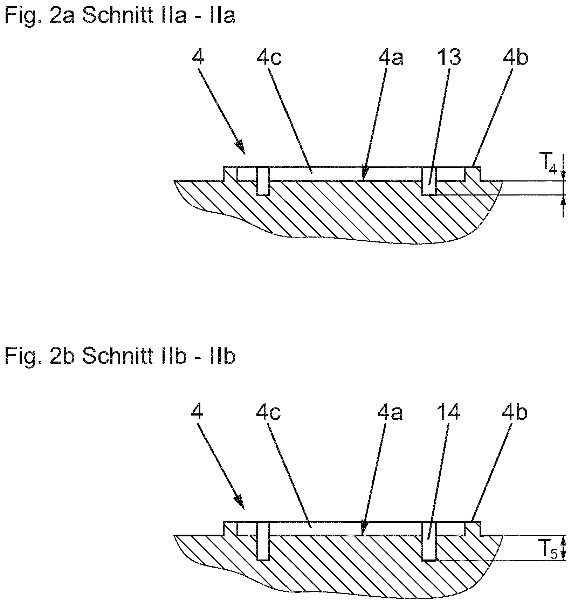

In den in Fig. 1 und Fig. 2 gezeigten Laufstreifenausschnitten von Fahrzeugluftreifen sind jeweils von einer sich in Umfangsrichtung erstreckenden schulterseitigen Blockreihe 1 ein Schulterblock 2 mit einer Blockoberfläche 2a, auf welcher ein Einstellungsindikator 3 (Fig. 1) bzw. ein Einstellungsindikator 4 (Fig. 2) positioniert ist, sowie in Umfangsrichtung an den Schulterblock 2 anschließende Teilbereiche weiterer Schulterblöcke 5, 6 dargestellt. Fig. 2 zeigt außerdem noch ein Stück vom mittleren Bereich des Laufstreifens, welches sich neben der schulterseitigen Blockreihe 1 ebenfalls in Umfangsrichtung erstreckt. Die nicht dargestellten Bereiche der Laufstreifen können in bekannter Art und Weise gestaltet sein.

Die Schulterblöcke 2, 5, 6 sind in Umfangsrichtung jeweils durch eine Querrille 7 voneinander getrennt. Die Schulterblöcke 2, 5, 6 sind durch eine beispielsweise als Rundrille ausgebildete Umfangsrille 9, die durch zwei Rillenflanken 9a, von denen eine bezeichnet ist, und einen Rillengrund 9b begrenzt wird, vom mittleren Bereich des Laufstreifens getrennt. Dabei verlaufen die Rillenflanken 9a bevorzugt unter einem spitzen Winkel zur radialen Richtung, welcher üblicherweise bis zu 10° beträgt. Die Kanten der Schulterblöcke 2, 5, 6, welche die jeweiligen Blockoberflächen in radialer Richtung begrenzen, können gefast oder zumindest teilweise gefast ausgeführt sein.

Der auf der Blockoberfläche 2a positionierte Einstellungsindikator 3, 4 erstreckt sich im Wesentlichen in axialer Richtung und in Richtung der Erstreckung des Schulterblockes 2 und endet vor der Rillenflanke 9a unter einem in axialer Richtung ermittelten Abstand a, welcher wenige Millimeter, beispielsweise 2,0 mm bis 3,0 mm, beträgt. Der Einstellungsindikator 3, 4 weist jeweils eine Indikatoroberfläche 3a, 4a auf, welche, in Draufsicht betrachtet, in Form eines Parallelogramms mit abgerundeten Ecken ausgeführt ist und über eine Umrandung 3b, 4b verfügt, die vorzugsweise als eine die Blockoberfläche um etwa 0,3 bis 0,6 mm überragende Erhebung ausgeführt ist. Die Seiten der Umrandung 3b, 4b verlaufen im Wesentlichen parallel zur Erstreckung der Umfangsrille 9 und der Querrillen 7.

Die Indikatoroberfläche 3a, 4a ist mit einer Vielzahl von Rippen 3c, 4c versehen, welche beispielsweise unter einem Winkel von 40° bis 50° zur Umfangsrichtung und parallel zueinander verlaufen, wobei die Rippen 3c, 4c insbesondere einen im Wesentlichen dreieckigen Querschnitt mit Rippenflanken aufweisen die unter einem Winkel von beispielsweise 60° zur Laufstreifenoberfläche verlaufen, an ihrer Basis beispielsweise eine Breite von 0,3 mm bis 0,6 mm mm besitzen und eine radiale Höhe aufweisen, die insbesondere der Höhe der Umrandung 3b, 4b entspricht.

Die Einstellungsindikatoren 3, 4 weisen jeweils eine Umfangserstreckung b von beispielsweise 10,0 mm und je nach Ausführungsvariante eine axiale Erstreckung l₁ (Fig. 1) von beispielsweise etwa 25,0 mm bzw. l₂ (Fig. 2) von beispielsweise 17,0 mm auf, wobei die Umfangserstreckung b und die axiale Erstreckung inklusive der Umrandungen 3b, 4b ermittelt sind.

Der in Fig. 1 gezeigte Einstellungsindikator 3 weist ausgehend von seiner Oberfläche 3a drei in radialer Richtung verlaufende Einschnitte 10, 11, 12 auf, wobei die Einschnitte 10, 11, 12 in Richtung Laufstreifenmitte aufeinanderfolgen sowie in ihrem Verlauf Rippen 3c unterbrechen. Entsprechend ihrer Anordnung sind die Einschnitte 10, 11, 12 nachfolgend als äußerer Einschnitt 10, als mittlerer Einschnitt 11 und als innerer Einschnitt 12 bezeichnet, wobei der innere Einschnitt 12 die geringste Entfernung und der äußere Einschnitt 10 die größte Entfernung von der Laufstreifenmitte aufweist. Jeder Einschnitt 10, 11, 12 setzt sich in Draufsicht aus einem V-förmigen Abschnitt, dessen Spitze in Richtung Laufstreifenmitte zeigt, sowie aus zwei an diesen anschließende gerade und parallel zueinander verlaufenden Abschnitten zusammen, wobei die geraden Abschnitte vorzugsweise gleich lang ausgeführt sind und parallel zu den längeren Seiten der Umrandung 3b verlaufen.

Gemäß den Schnittdarstellungen in Fig. 1a, 1b und 1c reichen die Einschnitte 10, 11, 12 von der Oberfläche 3a in unterschiedliche Tiefen T₁, T₂, T₃, wobei der äußere Einschnitt 10 die geringste Tiefe T₁ von insbesondere 0,3 mm bis 0,7 mm und der innere Einschnitt 12 die größte Tiefe T₃ von insbesondere 1,3 mm bis 1,7 mm aufweist. Die Tiefe T₂ des mittleren Einschnittes 11 liegt zwischen der Tiefe T₁ und der Tiefe T₃ und beträgt insbesondere 0,8 mm bis 1,2 mm.

Bei der in Fig. 2 dargestellten Variante des Einstellungsindikators 4 gehen von der Oberfläche 4a zwei in Richtung Laufstreifenmitte aufeinander folgende und in radialer Richtung verlaufende Einschnitte 13, 14 aus. Die Einschnitte 13, 14 setzen sich in Draufsicht aus einem asymmetrisch ausgeführten V-förmigen Abschnitt sowie aus zwei an diesen anschließende parallel zueinander und parallel zu den längeren Seiten der Umrandung 3b verlaufenden Abschnitten zusammen, wobei die parallel zueinander verlaufenden Abschnitte vorzugsweise gleich lang ausgeführt sind. Wie den Schnittdarstellungen der Fig. 2a und Fig. 2b zu entnehmen ist weisen die Einschnitte 13, 14 unterschiedliche Tiefen T₄, T₅ auf, wobei T₄ kleiner als T₅ ist. Die Tiefe T₄ des äußeren Einschnittes 13 beträgt insbesondere 0,3 mm bis 0,7 mm, die Tiefe T₅ des inneren Einschnittes 14 insbesondere 0,8 mm bis 1,2 mm.

Abweichend von den dargestellten Varianten können die Einstellungsindikatoren 3, 4 auch ohne Umrandung 3b, 4b sowie ohne Rippen 3c, 4c ausgeführt sein, sodass sie aus mehreren erfindungsgemäß mit unterschiedlichen Tiefen ausgeführten Einschnitten bestehen, die in Richtung Laufstreifenmitte aufeinanderfolgen. Außerdem können die Einstellungsindikatoren 3, 4 auch über mehr als drei Einschnitte verfügen, welche, in Draufsicht betrachtet, auch anders gestaltet sein können. Die Breite der Einschnitte beträgt 0,4 mm bis 0,6 mm.

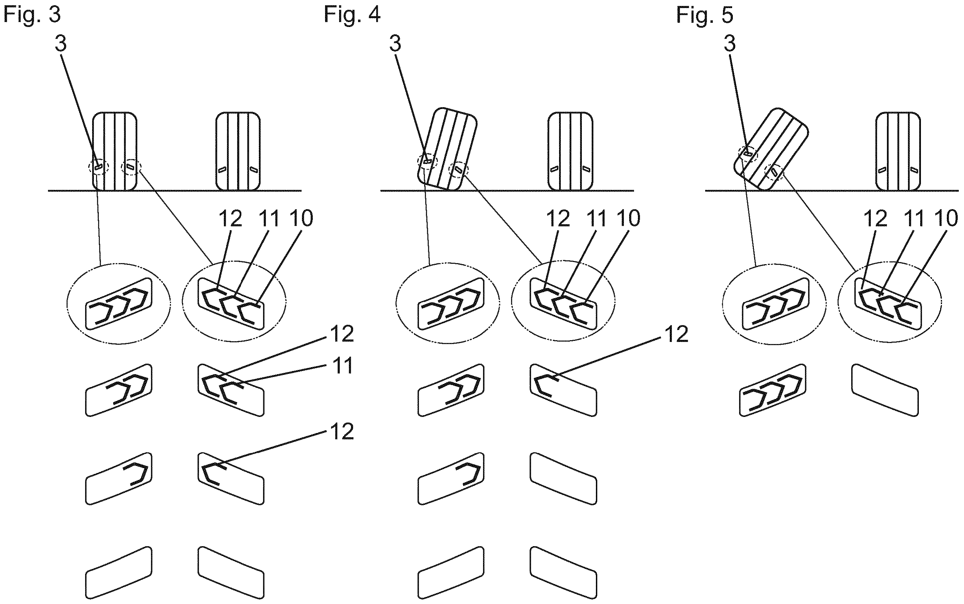

Nachfolgend wird unter Bezugnahme auf die Figuren 3 bis 5 die Funktionsweise erfindungsgemäßer Einstellungsindikatoren 3, 5 anhand des Einstellungsindikators 3 aus Fig. 1 erläutert.

Fig. 3 bis Fig. 5 zeigen je eine Frontansicht von zwei an einer vorderen Fahrzeugachse eines mehrachsigen Fahrzeuges, beispielsweise eines PKW, angeordneten Reifen und eine angedeutete Fahrbahn, bei unterschiedlichen Fahrwerkseinstellungen. Die Laufstreifen der dargestellten Reifen sind in jedem Schulterbereich mit je einem Einstellungsindikator 3 ausgestattet. Unterhalb der Reifen sind jeweils verschiedene Abriebszustände der Einstellungsindikatoren 3 des jeweils linken Reifens dargestellt.

Die in Fig. 3 dargestellten Reifen sind im Wesentlichen mit einem Sturz gleich Null eingestellt. Beide Schultern und somit sämtliche Einstellungsindikatoren 3 werden daher mit fortschreitender Betriebsdauer gleichmäßig abgerieben, wodurch als erstes jeweils der äußere Einschnitt 10, gefolgt vom mittleren Einschnitt 11 und zuletzt der innere Einschnitt 12 durch den Abrieb des Laufstreifens verschwinden.

Bei der in Fig. 4 dargestellten Fahrwerkseinstellung weist der linke Reifen einen negativen Sturz auf. Der rechte Reifen ist mit Sturz gleich Null eingestellt, wodurch seine Schultern und seine Einstellungsindikatoren 3 analog zu den Reifen aus Fig. 3 abgerieben werden. Beim linken Reifen wird beispielweise die, bezogen aus die Fahrzeuglängsachse, innenseitige Schulter stärker abgerieben, sodass auch der hier positionierte Einstellungsindikator 3 stärker als der außenseitige Einstellungsindikator 3 abgerieben wird. Wenn der innenseitige Einstellungsindikator 3 des linken Reifens keine Einschnitte mehr aufweist, ist beispielsweise beim reifenaußenseitigen Einstellungsindikator 3 der innerste Einschnitt 12 noch vorhanden. Dies lässt auf eine falsche Sturzeinstellung, hier auf einen zu großen negativen Sturz des linken Reifens schließen.

Fig. 5 zeigt eine Fahrwerkseinstellung, bei welcher der linke Reifen einen viel zu großen negativen Sturz aufweist. Dies führt zu ungleichmäßigem Abrieb, welcher besonders stark ausgeprägt ist, sodass beim linken Reifen beispielsweise die, bezogen auf die Fahrzeuglängsachse, innenseitige Schulter stärker abgerieben wird als die außenseitige Schulter. Dies macht sich in einem entsprechenden Verschwinden der Einschnitte des Einstellungsindikators 3 an der innenseitigen Schulter bemerkbar.

### Bezugsziffernliste

- 1: Blockreihe
- 2: Schulterblock
- 2a: Blockoberfläche
- 3: Einstellungsindikator
- 3a: Indikatoroberfläche
- 3b: Umrandung
- 3c: Rippen
- 4: Einstellungsindikator
- 4a: Indikatoroberfläche
- 4b: Umrandung
- 4c: Rippen
- 5: Schulterblock
- 6: Schulterblock
- 7: Querrille
- 8: Laufstreifenrand
- 9: Umfangsrille
- 9a: Rillenflanke
- 9b: Rillengrund
- 10: äußerer Einschnitt
- 11: mittlerer Einschnitt
- 12: innerer Einschnitt
- 13: äußerer Einschnitt
- 14: innerer Einschnitt
- T₁, T₂, T₃, T₄, T₅: Tiefen der Einschnitte
- a: Abstand
- b: Umfangserstreckung
- l₁, l₂: axiale Erstreckung

## Patentansprüche

1. Fahrzeugluftreifen mit einem Laufstreifen mit Profilpositiven in den Schulterbereichen, an deren Oberfläche (3a, 4a) zumindest je ein Einstellungsindikator (3, 4) ausgebildet ist, welcher zumindest zwei Einschnitte (10, 11, 12; 13, 14) unterschiedlicher Tiefen (T₁, T₂, T₃; T₄, T₅) aufweist, welche ausgehend von der Oberfläche (3a, 4a) in radialer Richtung in den Laufstreifen hineinragen, wobei die Einschnitte (10, 11, 12; 13, 14) in Richtung Laufstreifenmitte aufeinander folgen und umso tiefer ausgeführt sind, je geringer ihre Entfernung von der Laufstreifenmitte ist,
**dadurch gekennzeichnet,**
**dass** die Einschnitte (10, 11, 12; 13, 14) in Draufsicht V-förmig ausgeführt sind oder einen V-förmigen Abschnitt aufweisen, wobei die V- Spitze in Richtung Laufstreifenmitte zeigt.

2. Fahrzeugluftreifen nach Anspruch 1, **dadurch gekennzeichnet, dass** die V-Form symmetrisch ausgeführt ist.

3. Fahrzeugluftreifen nach Anspruch 1, **dadurch gekennzeichnet, dass** die V-Form asymmetrisch ausgeführt ist.

4. Fahrzeugluftreifen nach einem der Ansprüche 1 bis 3, **dadurch gekennzeichnet, dass** der Einstellungsindikator (3, 4) eine Indikatoroberfläche (3a, 4a) aufweist, die mit einer Vielzahl von parallel zueinander verlaufenden Rippen (3c, 4c) versehen ist, die von der Profilpositivoberfläche abragen.

5. Fahrzeugluftreifen nach Anspruch 4, **dadurch gekennzeichnet**, die Rippen (3c, 4c) eine Höhe und an ihrer Basis eine Breite von 0,3 mm bis 0,6 mm aufweisen.

6. Fahrzeugluftreifen nach Anspruch 4 oder 5, **dadurch gekennzeichnet, dass** die Rippen (3c, 4c) unter einem Winkel von 40° bis 50° zur Umfangsrichtung geneigt verlaufen.

7. Fahrzeugluftreifen nach einem der Ansprüche 4 bis 6, **dadurch gekennzeichnet, dass** die Indikatoroberfläche (3a, 4a), in Draufsicht betrachtet, in Form eines Parallelogramms mit abgerundeten Ecken ausgeführt ist.

8. Fahrzeugluftreifen nach Anspruch 7, **dadurch gekennzeichnet, dass** die Seiten der parallelogrammförmigen Indikatoroberfläche (3a, 4a) im Wesentlichen in axialer Richtung und in Umfangsrichtung verlaufen.

9. Fahrzeugluftreifen nach einem der Ansprüche 6 bis 8, **dadurch gekennzeichnet, dass** die Indikatoroberfläche (3a, 4a) von einer Umrandung (3b, 4b) umlaufen bzw. begrenzt ist, welche gegenüber der Profilpositivoberfläche als Erhebung ausgeführt ist.

10. Fahrzeugluftreifen nach Anspruch 9, **dadurch gekennzeichnet, dass** die Umrandung (3b, 4b) eine Höhe von 0,3 mm bis 0,6 mm aufweist.

11. Fahrzeugluftreifen nach einem der Ansprüche 1 bis 10, **dadurch gekennzeichnet, dass** der seichteste Einschnitt (10, 13) eine Tiefe (T₁, T₄) von 0,3 mm bis 0,7 mm aufweist.

12. Fahrzeugluftreifen nach einem der Ansprüche 1 bis 10, **dadurch gekennzeichnet, dass** der tiefste Einschnitt (14) eine Tiefe (T₅) von 0,8 mm bis 1,2 mm aufweist.

13. Fahrzeugluftreifen nach einem der Ansprüche 1 bis 10, **dadurch gekennzeichnet, dass** der tiefste Einschnitt (12) eine Tiefe (T₃) von 1,3mm bis 1,7 mm aufweist.

## Claims

1. Pneumatic vehicle tyre comprising a tread with profile positives in the shoulder regions, on the surface (3a, 4a) of which there is formed in each case at least one setting indicator (3, 4), which comprises at least two sipes (10, 11, 12; 13, 14) of different depths (T₁, T₂, T₃; T₄, T₅) that reach from the surface (3a, 4a) into the tread in the radial direction, the sipes (10, 11, 12; 13, 14) following one another in the direction of the middle of the tread and being formed such that, the smaller their distance from the middle of the tread, the deeper they are,
**characterized**
**in that** in plan view the sipes (10, 11, 12; 13, 14) are formed in the shape of a V or comprise a V-shaped portion, the tip of the V pointing in the direction of the middle of the tread.

2. Pneumatic vehicle tyre according to Claim 1,
**characterized in that** the V shape is symmetrically formed.

3. Pneumatic vehicle tyre according to Claim 1,
**characterized in that** the V shape is asymmetrically formed.

4. Pneumatic vehicle tyre according to one of Claims 1 to 3, **characterized in that** the setting indicator (3, 4) comprises an indicator surface (3a, 4a) which is provided with a multiplicity of ribs (3c, 4c) running parallel to one another that protrude from the surface of the profile positive.

5. Pneumatic vehicle tyre according to Claim 4,
**characterized in that** the ribs (3c, 4c) have a height and at their base a width of 0.3 mm to 0.6 mm.

6. Pneumatic vehicle tyre according to Claim 4 or 5,
**characterized in that** the ribs (3c, 4c) run inclined at an angle of 40° to 50° in relation to the circumferential direction.

7. Pneumatic vehicle tyre according to one of Claims 4 to 6, **characterized in that**, seen in plan view, the indicator surface (3a, 4a) is formed in the shape of a parallelogram with rounded corners.

8. Pneumatic vehicle tyre according to Claim 7,
**characterized in that** the sides of the indicator surface (3a, 4a) in the shape of a parallelogram run substantially in the axial direction and in the circumferential direction.

9. Pneumatic vehicle tyre according to one of Claims 6 to 8, **characterized in that** the indicator surface (3a, 4a) is surrounded or delimited by a surrounding border (3b, 4b), which is formed as an elevation with respect to the surface of the profile positive.

10. Pneumatic vehicle tyre according to Claim 9,
**characterized in that** the surrounding border (3b, 4b) has a height of 0.3 mm to 0.6 mm.

11. Pneumatic vehicle tyre according to one of Claims 1 to 10, **characterized in that** the shallowest sipe (10, 13) has a depth (T₁, T₄) of 0.3 mm to 0.7 mm.

12. Pneumatic vehicle tyre according to one of Claims 1 to 10, **characterized in that** the deepest sipe (14) has a depth (T₅) of 0.8 mm to 1. 2 mm.

13. Pneumatic vehicle tyre according to one of Claims 1 to 10, **characterized in that** the deepest sipe (12) has a depth (T₃) of 1.3 mm to 1.7 mm.

## Revendications

1. Pneumatique de véhicule comprenant une bande de roulement avec des parties profilées positives dans les régions d'épaulement, sur la surface (3a, 4a) desquelles est au moins réalisé à chaque fois un indicateur d'ajustement (3, 4) qui présente au moins deux entailles (10, 11, 12 ; 13, 14) de profondeurs différentes (T₁, T₂, T₃ ; T₄, T₅) qui pénètrent à partir de la surface (3a, 4a) dans la direction radiale dans la bande de roulement, les entailles (10, 11, 12 ; 13, 14) se suivant les unes derrière les autres dans la direction du milieu de la bande de roulement et étant d'autant plus profondes qu'elles sont proches du milieu de la bande de roulement,
**caractérisé en ce que**
les entailles (10, 11, 12 ; 13, 14), en vue de dessus, sont réalisées en forme de V ou présentent une portion en forme de V, la pointe du V étant orientée dans la direction de la bande de roulement.

2. Pneumatique de véhicule selon la revendication 1,
**caractérisé en ce que** la forme en V est réalisée de manière symétrique.

3. Pneumatique de véhicule selon la revendication 1,
**caractérisé en ce que** la forme en V est réalisée de manière asymétrique.

4. Pneumatique de véhicule selon l'une quelconque des revendications 1 à 3, **caractérisé en ce que** l'indicateur d'ajustement (3, 4) présente une surface d'indicateur (3a, 4a) qui est pourvue d'une pluralité de nervures (3c, 4c) s'étendant parallèlement les unes aux autres qui font saillie depuis la surface des parties profilées positives.

5. Pneumatique de véhicule selon la revendication 4,
**caractérisé en ce que** les nervures (3c, 4c) présentent une hauteur et, au niveau de leurs bases, une largeur, de 0,3 mm à 0,6 mm.

6. Pneumatique de véhicule selon la revendication 4 ou 5, **caractérisé en ce que** les nervures (3c, 4c) s'étendent de manière inclinée suivant un angle de 40° à 50° par rapport à la direction périphérique.

7. Pneumatique de véhicule selon l'une quelconque des revendications 4 à 6, **caractérisé en ce que** la surface d'indicateur (3a, 4a), en vue de dessus, est réalisée en forme de parallélogramme avec des coins arrondis.

8. Pneumatique de véhicule selon la revendication 7,
**caractérisé en ce que** les côtés de la surface d'indicateur (3a, 4a) en forme de parallélogramme s'étendent essentiellement dans la direction axiale et dans la direction périphérique.

9. Pneumatique de véhicule selon l'une quelconque des revendications 6 à 8, **caractérisé en ce que** la surface d'indicateur (3a, 4a) est limitée ou entourée par un bord périphérique (3b, 4b) qui est réalisé, par rapport à la surface des parties profilées positives, sous forme de rehaussement.

10. Pneumatique de véhicule selon la revendication 9,
**caractérisé en ce que** le bord périphérique (3b, 4b) présente une hauteur de 0,3 mm à 0,6 mm.

11. Pneumatique de véhicule selon l'une quelconque des revendications 1 à 10, **caractérisé en ce que** l'entaille la moins profonde (10, 13) présente une profondeur (T₁, T₄) de 0,3 mm à 0,7 mm.

12. Pneumatique de véhicule selon l'une quelconque des revendications 1 à 10, **caractérisé en ce que** l'entaille la plus profonde (14) présente une profondeur (T₅) de 0,8 mm à 1,2 mm.

13. Pneumatique de véhicule selon l'une quelconque des revendications 1 à 10, **caractérisé en ce que** l'entaille la plus profonde (12) présente une profondeur (T₃) de 1,3 mm à 1,7 mm.
